# EUROPEAN PATENT APPLICATION

(11) **EP 2 187 346 A1**
(43) Date of publication of application: **19.05.2010**
(21) Application number: 09468005.5
(22) Date of filing: 17.08.2009
(51) Int. Cl.: G06Q 10/00

(54) **Method for identification of a document and a system for carrying out said method**

(30) Priority: 06.11.2008 SI 200800271
(71) Applicant: Levicar, Jure, 1352 Preserje (SI); Macek, Marley, 1000 Ljubljana (SI); Zitko, Gasper, 1352 Preserje (SI); Pangerl, David, 3211 Skofja vas (SI)
(72) Inventor: Levicar, Jure, 1352 Preserje (SI); Macek, Marley, 1000 Ljubljana (SI); Zitko, Gasper, 1352 Preserje (SI); Pangerl, David, 3211 Skofja vas (SI)
(74) Representative: Ivancic, Bojan

(57) **Abstract**

The present invention refers to a method for identification of a document which is preferably used in a trade, in particular in the field of commerce, warehousing, catering, and similar, where said document, which is preferably a packing list, a debit note, a delivery report, a certificate of receipt and similar, comprises at least one code record which can be used for a clear identification of said document. It is provided for according to the invention that said code record (2) is a two dimensional code record comprising an additional code record (5).

## Description

The present invention refers to a method for identification of a document which is preferably used in a trade, in particular in the field of commerce, warehousing, catering, and similar, where said document, which is preferably a packing list, a debit note, a delivery report, a certificate of receipt and similar, comprises at least one code record which can be used for a clear identification of said document.

A known method for identification of the aforementioned document comprises mostly manual work. As a result, there is a substantial likelihood of an error of a person manipulating said document. Furthermore, identifying said document and entering the data is rather time consuming, in particular if there exists a plurality of data on said document. In addition, said drawbacks result in relatively higher processing costs of the said document.

It is the object of the present invention to create a method for identification of a document which is preferably used in a trade, in particular in the field of commerce, warehousing, catering, and similar which will remedy the drawbacks of the known methods.

Another object of the invention is to create a system for carrying out said method for identification of said document.

Furthermore, it is another object of the invention to create a code record for identification of said document.

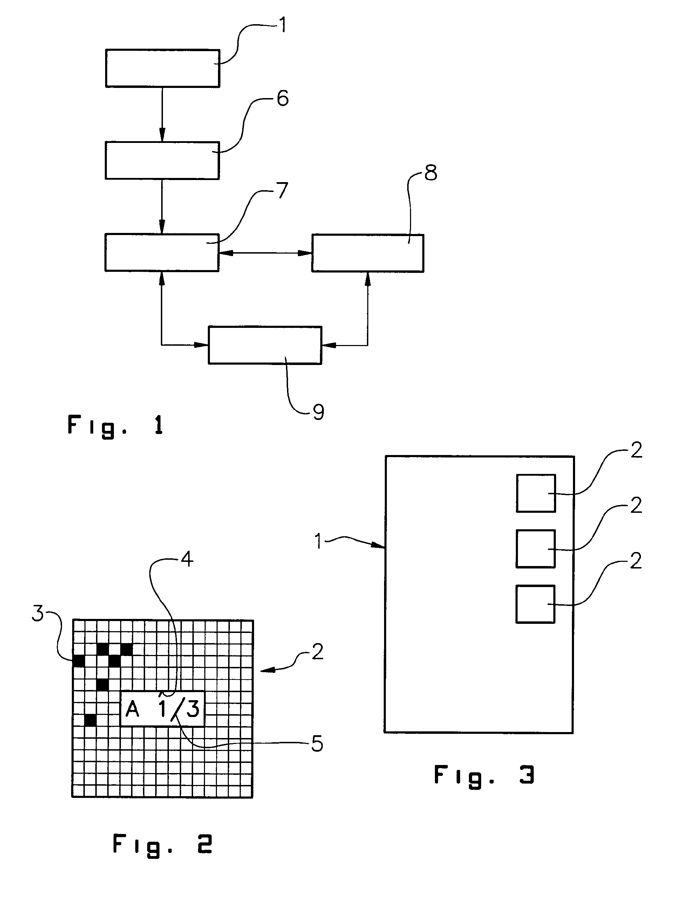

The invention will be more readily understood on reading the following description with reference to the accompanying drawing where
- Fig. 1: shows a schematic view of a system for identification and processing of said document,
- Fig. 2: shows an embodiment of a code record, and
- Fig. 3: shows an embodiment of a document having a code record.

It is provided for, according to the present invention, that a document 1 which is preferably used in a trade, in particular in the field of commerce, warehousing, catering, and similar, where said document, which is preferably a packing list, a debit note, a delivery report, a certificate of receipt and similar, is provided with a code record preferably a two dimensional (2D) code record 2. Said 2D code record 2 comprises a set of dots 3 arranged in a rectangular pattern, said code record 2 comprises all the necessary information for smooth and efficient movement of goods. An additional field 4 with an additional code record 5 is provided in the area of said code record 2. It is provided for, according to the invention, that said additional code record is preferably formed as an alpha-numeric code record 5 and is preferably intended to be read by the personal. Said additional code record 5 carries the information on the number of the 2D code records 2 and on the priority of retrieval of said 2D code records 2, which is of particular importance with a large number of different items being processed.

When said document 1, together with the goods being processed, arrives at the specified destination a receiver takes-over said goods and reads said code record 2 from said document 1 using a code reader 6 known per se. If several 2D code records is present on said document the receiver of the goods checks at first the number and the reading order of the 2D code records 2, and afterwards the receiver reads said 2D code record 2 which carries said additional code record 5 in said additional field 4, said additional code record 5 clearly notifies the receiver about the reading which is to be performed. The information on number and order of the 2D code records 2 is also written in each code record 2 itself, however, said additional code record 5 additionally facilitates and expedites the work of the receiver.

When the receiver, utilizing said code reader 6, finishes the reading of said information from each said 2D code record, said code reader 6 transmits said readout to a processor unit 7 which processes said information. Processing said information in said processor unit 7 is performed in a manner that from the set of said information being obtained from said code reader 6 at least one such subset of said information is extracted which clearly identifies particular set of the information, for example a nature of goods being delivered. Said each subset of the information being read is subsequently compared with the information that are stored in a database 8. Depending on the information from said information subset which are already contained in said database 8, only those data from said set of information are changed and/or amended in said database 8 which differ from the existing data in said database 8. Said step is repeated as often as there is different information subsets contained in said set of information obtained from said code reader 6.

During processing of the information the processor unit 7 requires from the receiver to confirm each input and/or amendment in the database 8. Optionally, the processor unit 7 can offer the receiver a possibility of manual input and/or amendment of the information contained in the database 8. Said communication in the direction processor unit 7 - receiver - database 8 is carried out via terminal 9, for example, said terminal being connected with both the processor unit and the database.

The invention is further described in details with reference to one particular embodiment, such as a delivery report.

Let us start from the assumption that a company A, for example, supplies goods to different receivers, a company B for example. To this end, the company A makes a document, a delivery report in a given case, comprising a two dimensional (2D) code record according to the invention. Said 2D code record comprises all information relating to the particular shipment, such as the name and the address of the receiver of said shipment, i.e. the company B in a given case, the goods being delivered, including the name thereof, quantity, producer etc., the name and the address of the supplier of said shipment, and all the remaining data which are necessary for the precise identification. The inner area of said 2D code record comprises the additional field with the additional code record. Said additional code record is preferably an alpha-numeric code record intended to be read by the user/receiver and which clearly and precisely shows the number and the read-out order of the 2D code records comprised in said delivery report.

When the supplier A delivers the goods to the receiver B, the latter, at first, checks the additional code record to find out the number of the 2D code records and in what order are they arranged in the delivery report, and afterwards, using the 2D code reader, reads from the delivery report the first 2D code record which is defined by the first additional code record. Said 2D code reader transmits the read-out and decoded information to the processor unit which processes said information. Said processor unit checks at first if the supplier already exists in the database of the receiver. If the supplier in question is not yet comprised in said database of the receiver, the software, which runs the entire process in the processor unit, offers the user an opportunity to confirm the input of the new supplier.

If, on the contrary, the supplier already exists in the database of the receiver, or after the input of the new supplier into said database of the receiver, the processor unit further checks if the goods delivered already exists in the database of the receiver. If the goods in question is not yet comprised in said database of the receiver, the software, which runs the entire process in the processor unit, offers the user an opportunity to confirm the input of the new goods. If, on the contrary, the goods already exists in the database of the receiver, or after the input of the new goods into said database of the receiver, the processor unit amends the stock quantity of the delivered goods in the database of the receiver.

Afterwards, using said code reader the receiver optionally reads the second and all further 2D code records comprised in the delivery report and the procedure starts again, for each 2D code record, in a manner described above. Upon entering said data into said database of the receiver, as described above, the receiver can optionally handle the entered data by means of a terminal connected with said processor unit and said database.

## Claims

1. A method for identification of a document which is preferably used in a trade, in particular in the field of commerce, warehousing, catering, and similar, where said document, which is preferably a packing list, a debit note, a delivery report, a certificate of receipt and similar, comprises at least one code record which can be used for a clear identification of said document, ***characterised in that*** it comprises the following steps:
a) forming said document with at least one code record,
b) receiving said document with at least one code record by a receiver,
c) determining the number of code records and the read-out order thereof,
d) reading said code records in the prescribed order by means of a code reader,
e) processing the information obtained in the previous step,
f) storing the amended and/or new information to said database.

2. A method for identification of a document according to claim 1, ***characterised in that*** the processing of the information obtained in said step d) is carried out in a manner that from a set of information obtained by means of said code reader, at least one such subset of the information is extracted which clearly identifies the set of the information, and afterwards each said subset of the read-out information is compared with the information stored in a database, and based on the information from said subset of the information which are already comprised in said database, only those data from said set of the information is added and/or amended which are changed with regard to the existing data in said database.

3. A method for identification of a document according to claims 1 and 2, ***characterised in that*** the amending and/or adding of the information is carried out either manually or automatically.

4. A system for identification of a document which is preferably used in a trade, in particular in the field of commerce, warehousing, catering, and similar, where said document, which is preferably a packing list, a debit note, a delivery report, a certificate of receipt and similar, ***characterised in that*** said system comprises a document (1) provided with at least one code record (2), a code reader (6), a processor unit (7) which processes the information obtained by means of said code reader (6), a database (8) where new and/or amended information is stored, and a terminal (9) for manual input and/or amendment of the information in said database (8).

5. A code record for identification of a document which is preferably used in a trade, in particular in the field of commerce, warehousing, catering, and similar, where said document, which is preferably a packing list, a debit note, a delivery report, a certificate of receipt and similar, ***characterised in that*** said code record (2) is a two dimensional code record consisting of a set of dots (3) arranged in a rectangular pattern.

6. A code record according to claim 5, ***characterised in that*** in an additional filed (4) with an additional code record (5) is formed in the area of the code record (2).

7. A code record according to claims 5 and 6, ***characterised in that*** said additional code record is preferably formed as an alpha-numeric code record (5).

8. A document according to any of claims 1 to 7, ***characterised in that*** it comprises at least one said code record.

## Amended claims

### Amended claims in accordance with Rule 137(2) EPC.

**1.** A device for identification of a document which is preferably used in a trade, in particular in the field of commerce, warehousing, catering, and similar, where said document is preferably a packing list, a debit note, a delivery report, a certificate of receipt and similar, said device being a code record, preferably a two dimensional code record consisting of a set of dots arranged in a rectangular pattern, ***characterised in that*** an additional filed (4) with an additional code record (5) is formed in the area of said code record (2).

**2.** A device according to claim 1, ***characterised in that*** said additional code record is preferably formed as an alpha-numeric code record (5).

**3.** A document according to any of claims 1 and 2, ***characterised in that*** it comprises at least one said device.
